# EUROPÄISCHE PATENTSCHRIFT

(11) **EP 0 677 536 B1**
(45) Veröffentlichungstag und Bekanntmachung des Hinweises auf die Patenterteilung: **15.07.1998**
(21) Anmeldenummer: 95102616.0
(22) Anmeldetag: 24.02.1995
(51) Int. Cl.: C08F 2/44

(54) **Verfahren zur Herstellung einer temperaturabhängig eintrübenden Polymermatrix**
Process for preparing a polymer matrix with temperature-dependent haze
Procédé de préparation d'une matrice polymère avec dispersion de lumière dépendante de la température

(30) Priorität: 13.04.1994 DE 4412588
(43) Veröffentlichungstag der Anmeldung: 18.10.1995
(73) Patentinhaber: HÜLS AKTIENGESELLSCHAFT, 45764 Marl (DE); Chemetall GmbH, D-60271 Frankfurt (DE)
(72) Erfinder: Bösing, Ludger, D-46284 Dorsten (DE); Grünberg, Petra, D-60528 Frankfurt (DE); Riemer, Heinz, Dr., D-46244 Bottrop (DE); Friedrich, Werner, D-45701 Herten (DE); Pollok, Thomas, Dr., D-64546 Mörfelden-Walldorf (DE)

(56) Entgegenhaltungen:
- EP-A- 0 263 586
- EP-A- 0 311 566
- EP-A- 0 376 118

## Beschreibung

Die Erfindung betrifft ein Verfahren zur Herstellung eines nicht fließfähigen, temperaturabhängig reversibel lichtdurchlässigen Gelmaterials, das auf möglichst einfache Weise in den üblichen Fertigungsprozeß von Verbundverglasungen integriert werden kann und das universell im Innen- und Außenbereich einsetzbare froststabile Verglasungen liefert.

Derartige Verglasungen lassen sich überall dort einsetzen, wo hinter an sich transparenten Glasflächen bei intensiver Bestrahlung durch z. B. Sonnenlicht Überschreitungen bestimmter Temperaturen unerwünscht oder sogar schädlich sind. Hier sind insbesondere transparente Dächer und Wände in Industriehallen, Gewächshäusern usw. zu nennen.

Es gibt zahlreiche Vorschläge, derartige Anforderungen durch automatisch und reversibel arbeitende Schattierungssysteme, die bei Überschreitung bestimmter Temperatur- oder Lichtintensitäten wirksam werden, zu erfüllen.

So ist z. B. bekannt, Verbundverglasungen und insbesondere Doppelverglasungen mit temperaturabhängiger Transparenz auszustatten, indem man verschieden aufgebaute Folien bzw. Gele in den Zwischenraum zwischen parallel angeordnete Glasscheiben einbringt.

Die bisher bekannten Lösungsvorschläge erfüllen jedoch nicht die genannte Anforderung nach einer unproblematischen Integration in den industriellen Fertigungsprozeß von Verbundverglasungen und einer möglichst universellen Einsetzbarkeit.

Bei der Entwicklung thermoempfindlicher Systeme für die genannten Anwendungen wird in vielen Fällen das Phänomen des "Trübungspunktes" genutzt, das für viele Polymerlösungen sowie nichtionische Tenside bei charakteristischen Temperaturen durch reversible Solvatierungs-/Desolvatierungsvorgänge bzw. hierdurch ermöglichte "Ver- und Entknäuelungsprozesse" erfolgt.

Bei Erreichen des Trübungspunktes wird einfallendes Licht an Teilchen mit Durchmessern oberhalb der Wellenlänge des sichtbaren Lichtes reflektiert bzw. gestreut und z. T. absorbiert.

Wasserquellbare Folien auf Basis verschiedener Polymerer werden z. B. in der deutschen Offenlegungsschrift DE 32 10 378, der Patentschrift US 4 409 383 und der europäischen Anmeldung EP 0 311 566 beschrieben.

Der wesentliche Nachteil der in den o.a. Schriften vorgeschlagenen Systeme liegt in der fehlenden Froststabilität.

Die fehlende Froststabilität schränkt auch die Verwendbarkeit von Systemen aus Polymeren und Hydratsalzen, wie sie in den Patentschriften DBP 11 54 905, DBP 10 12 752 und DBP 953 193 vorgeschlagen werden, ein.

Auch die in der Patentschrift US-2 710 274 angeführten Gele enthalten neben Glykolen zur Trübungspunktregelung der wässrigen Methylpolyvinyletherlösungen noch einen zu hohen Wasseranteil, um froststabile Systeme zu ermöglichen. Die mit Agar-Agar verdickten Gele weisen darüberhinaus den Nachteil auf, speziell bei großflächigen senkrecht stehenden Verglasungen infolge ihres halbflüssigen Aggregatzustandes aufgrund der Schwerkraft zu unerwünschten Ausbauchungen von Doppelverglasungen zu führen.

Derartig ausgebauchte Scheiben mit ungleichmäßiger Gelschichtdicke weisen insbesondere in der Durchsicht optische Verzerrungen auf, die in Gebäudeverglasungen nicht akzeptabel sind. Darüber hinaus wird im Falle eines Bruchs einer derartigen Scheibe das Gel aus der defekten Scheibe herausfließen und eine nur mit erheblichem Aufwand wieder zu beseitigende Verunreinigung der Gebäudeoberfläche verursachen.

Obwohl die oben beschriebenen Gele noch fließfähig sind, sind sie doch bei weitem zu zähflüssig, als daß sie nach dem weitverbreiteten Gießharzverfahren, welches z. B. in der GB 2 155 856 beschrieben wird, in den engen Zwischenraum zwischen den zwei Glasscheiben einer Verbundglasscheibe eingebracht werden könnten.

Die niedrigviskosen Systeme der FR 2 090 036, in der die Eintrübung durch niedrigkonzentrierte Lösungen von Tensiden (verschiedene Alkyl- bzw. Alkylphenyl polyglykolether) bzw. von Ethylenoxid-Propylenoxid-Copolymeren in Wasser bzw. Butylglykol erreicht wird, sind zwar aufgrund ihrer Fließfähigkeit für die industrielle Verarbeitung nach dem Gießharzverfahren geeignet, weisen dafür aber noch deutlicher den Effekt der Ausbauchung der Scheiben auf.

Die wäßrigen Einstellungen weisen als weiteren Nachteil die bereits erwähnte Frostinstabilität auf. Die in der Patentschrift DE 35 22 078 beschriebenen Gele erlauben zwar eine froststabile Einstellung durch Erhöhung des Anteils an Glykolen und Alkoholen, die Nachteile des Ausbauchens großflächiger Doppelverglasungen weisen jedoch auch diese Gele auf. Als weiterer Nachteil ist auch hier die hohe Viskosität der beschriebenen Trübungsgele anzusehen (s. Vergleichsbeispiel 1), die eine schnelle und blasenfreie Einbringung des Gels in die vergleichweise engen Zwischenräume typischer Doppelverglasungen nur unter großem technischen Aufwand zuläßt. Auch die erforderliche Reifezeit der Gele von bis zu 12 Stunden vor der Anwendung ist ein Handhabungsnachteil für einen industriellen Produktionsablauf.

Aufgabe der vorliegenden Erfindung ist es daher, ein Verfahren zur Herstellung eines nicht fließfähigen Gelmaterials mit über einen möglichst weiten Temperaturbereich einstellbarer temperaturabhängiger reversibler Lichtdurchlässigkeit ohne die oben genannten Nachteile zu entwickeln. Insbesondere soll das System im Verarbeitungszustand eine möglichst niedrige Viskosität aufweisen, so daß es nach dem Gießharzverfahren verarbeitet werden kann. Im Gebrauchszustand soll die Festigkeit des Systems dagegen so hoch sein, daß keinerlei Fließfähigkeit mehr gegeben ist und dadurch keine Ausbauchung innerhalb des Scheibenverbundes bzw. kein Herauslaufen mehr möglich ist.

Darüber hinaus soll das System froststabil und stabil gegen UV- und Temperaturwechselbeanspruchungen sein und hinsichtlich des Randverbundes nicht zu Problemen mit den üblichen Dichtungsmaterialien für Mehrfachverglasungen führen.

Die Aufgabe wird erfindungsgemäß dadurch gelöst, daß ein froststabil eingestelltes Trübungssystem zunächst mit grundsätzlich polymerisierbaren Monomeren homogen gemischt wird. Diese möglichst niedrigviskose Mischung wird dann nach Einbringung in den Zwischenraum von parallelen Glasplatten einem Polymerisationsvorgang unterworfen, wobei eine nicht mehr fließfähige Polymermatrix entsteht, in der das auf eine bestimmte Trübungstemperatur eingestellte Trübungssystem gleichmäßig verteilt ist.

Gegenstand der Erfindung ist daher ein Verfahren zur Herstellung eines nicht fließfähigen, temperaturabhängig reversibel lichtdurchlässigen Gelmaterials enthaltend nichtionische und/oder nichtionisch wirkende Tenside als Trübungskomponenten, Froststabilisatoren, Wasser und gegebenenfalls übliche Additive, dadurch gekennzeichnet, daß zuerst eine ethylenisch ungesättigte Monomere enthaltende homogene Mischung mit den oben genannten Bestandteilen in niedrigviskosem Zustand an den Applikationsort gebracht wird und daß dann durch Polymerisation eine vernetzte Polymermatrix erzeugt wird, welche die übrigen Komponenten in gleichmäßiger Verteilung enthält.

Als wesentliche Komponenten der erfindungsgemäßen Trübungssysteme können prinzipiell alle nichtionischen Tenside verwendet werden. Auch nichtionisch wirkende Tenside, die entweder selbst oder nach Zusatz von Salzen Trübungspunkte in Wasser aufzeigen, sind einsetzbar.

Die froststabile Einstellung kann auf einfache Weise dadurch erreicht werden, daß man dem Gesamtsystem entsprechende Mengen an niederen ein- oder mehrwertigen Alkoholen (z. B. Ethanol, Ethylenglykol, Glycerin, 1,2-Propylenglykol) bzw. Glykolderivaten zusetzt.

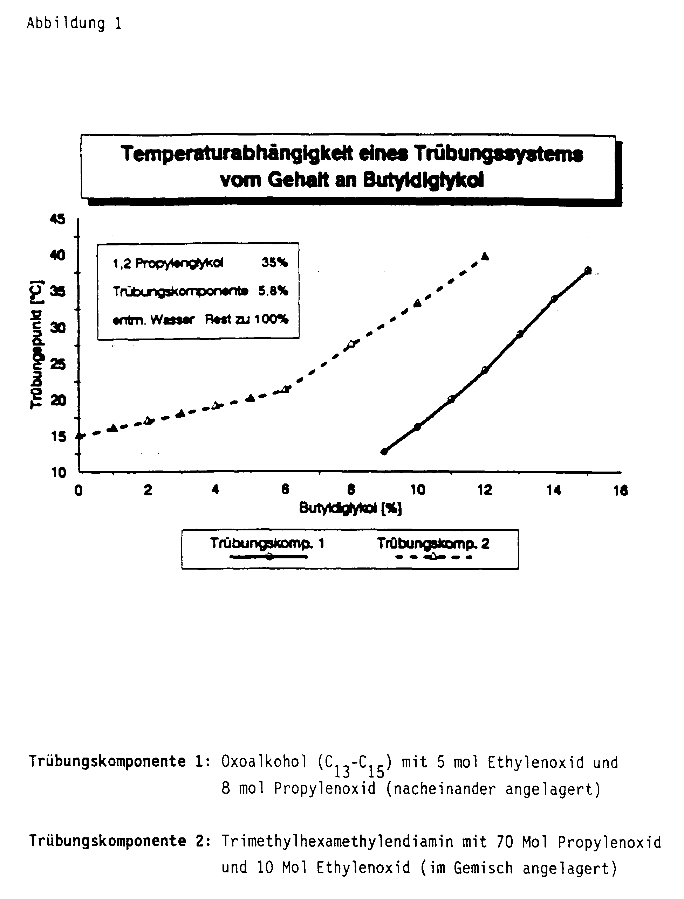

Über die Art der Tenside sowie die Menge von zugesetzten Gefrierschutzmitteln (wie z. B. Diethylenglykolmonobutylether) lassen sich auf einfache Weise mit wenigen Grundkomponenten Trübungssysteme konzipieren, die allein über ihr Mischungsverhältnis die Einstellung von definierten Trübungstemperaturen über vergleichsweise breite Temperaturbereiche zu variieren gestatten. Dies ist in Abb. 1 am Beispiel von zwei verschieden eintrübenden Substanzen erläutert.

Bei einer praktischen Anwendung, d. h. Einarbeitung in ein polymerisierbares System, wie es weiter unten beschrieben wird, ist zu berücksichtigen, daß die in Abb. 1 angeführten Trübungstemperaturen verschoben werden. Da aber auch hier - wenn auch auf anderem Temperaturniveau - nahezu lineare Abhängigkeiten der Trübungstemperaturen von den Gehalten an "Frostschutzkomponenten" und Glykolderivaten bestehen, lassen sich die erforderlichen Mischungsverhältnisse für die unterschiedlichsten Mischungen durch wenige Versuche festlegen.

### Trübungskomponenten

Als Bestandteile der Trübungssysteme können Substanzen verwendet werden, die in wasserhaltigen Abmischungen mit Alkoholen und Glykolderivaten Trübungspunkte im Bereich von 10 bis 90 °C, vorzugsweise 10 bis 70 °C aufweisen.

Hierzu gehören:
a) Gegebenenfalls veretherte Fettalkoholalkoxylate, Alkylphenolalkoxylate und Alkoxylate synthetischer Alkohole (Oxo-Alkohole) der allgemeinen Formel 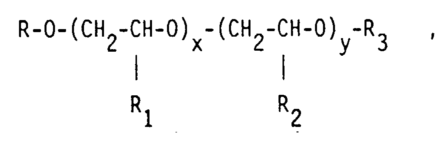 worin R ein linearer oder verzweigter Alkylrest mit 8 bis 18 Kohlenstoffatomen oder ein Alkylarylrest mit 4 bis 18 Kohlenstoffatomen in der verzweigten oder linearen Alkylkette oder ein Dialkylarylrest mit 8 bis 24 Kohlenstoffatomen in den verzweigten oder linearen Ketten oder ein Alkylcyclohexylrest mit 4 bis 18 Kohlenstoffatomen in der verzweigten oder linearen Alkylkette oder ein Arylphenylrest mit 1 bis 3 Arylgruppen und
   R₁ = R₂ = H oder R₁ = H und R₂ = -CH₃ oder R₂ = H und R₁ = -CH₃ und
   R₃ H oder eine lineare oder verzweigte Alkylgruppe mit 1 bis 6 Kohlenstoffatomen sein kann und
   x oder y gleich oder verschieden sein können und zwischen 0 und 20 liegen. Die Alkoxygruppen können dabei sowohl in zwei aufeinander folgenden Schritten wie auch als Gemisch an das Startmolekül R-OH angelagert werden.
b) Alkoxylate von nach gängigem Verfahren alkoxylierten natürlichen Fetten und Ölen, wobei insbesondere Ethylenoxid und/oder Propylenoxid als Alkoxide geeignet sind, und die alkoxylierten Produkte erfindungsgemäß pro Mol Triglycerid zwischen 10 und 70 Mol Alkylenoxid enthalten.
c) Alkylpolyalkylenglykolester - auch Diester - von Fettsäuren und Dimerfettsäuren mit 8 bis 36 Kohlenstoffatomen und 4 bis 25 Alkylenoxidgruppen.
d) Alkoxylate von Alkylmono- und Polycarbonsäuren.
e) Alkoxylate von primären und sekundären Alkylmono- und -polyaminen mit 2 bis 36 Kohlenstoffatomen in der verzweigten oder linearen Alkylkette. Insbesondere sind Umsetzungsprodukte geeignet, deren Gehalt an Ethylenoxid (und/oder Propylenoxid) zwischen 20 und 80 Massenprozent liegt.
f) Polyalkylenoxide mit Molekulargewichten von 400 bis 20 000 g/mol (vorwiegend 1 000 bis 6 000 g/mol), wobei im Fall von Copolymeren die fraglichen Produkte sowohl als Misch- wie auch als Blockcopolymerisate wirksam sind.
g) Alkoxylate von Fettsäureamiden, wobei die Kohlenstoffkette der Carbonsäuren 8 bis 22 Kohlenstoffatome, vorzugsweise 12 bis 18 Kohlenstoffatome, enthält und die Amide nach üblichen Verfahren unter Verwendung von primären und sekundären Alkanolaminen, vorzugsweise Mono- bzw. Diethanolamin, hergestellt werden und anschließend mit Alkylenoxiden, vorzugsweise Ethylenoxid, alkoxyliert werden, wobei 1 bis 10 Mol Alkylenoxid pro Mol Fettsäureamid angelagert werden.
h) Umsetzungsprodukte von Alkylpolyglykolethern mit Anhydriden von Dicarbonsäuren, insbesondere Maleinsäureanhydrid, Bernsteinsäureanhydrid, Phthalsäureanhydrid und Hexahydrophthalsäureanhydrid.
i) Alkyl- bzw. Alkylarylpoly(oxyalkylen)-Carbonsäuren (Ethercarbonsäuren), wobei als Ausgangsalkoxylate die unter a genannten Verbindungen eingesetzt werden können.

### Froststabilisatoren

Obwohl eine gewisse Froststabilität auch mit Zusätzen von Salzen oder den Erstarrungspunkt von Wasser herabsetzenden Substanzen (z. B. Harnstoff) grundsätzlich möglich ist, lassen sich für die erfindungsgemäßen Trübungssysteme am einfachsten mit Alkoholen problemlos (z. B. keine Aussalzungen von Tensiden) Froststabilitäten bis -30 °C einstellen. Die Kombination von Alkoholen und anorganischen Salzen wie Alkali-, Erdalkali- oder Ammoniumsalzen ist aber nicht ausgeschlossen.

Die erfindungsgemäßen Alkohole werden ausgewählt aus der Gruppe der wasserlöslichen ein- und mehrwertigen Alkohole mit 1 bis 6 OH-Gruppen und mit 1 bis 6 Kohlenstoffatomen, vorwiegend 2 bis 4 Kohlenstoffatomen, und/oder aus der Gruppe der wasserlöslichen Alkylglykole mit 1 bis 4 Kohlenstoffatomen in der Alkylkette und 1 bis 20 Alkylenoxidgruppen, und/oder aus der Gruppe der niedermolekularen Polyalkylenglykole im Molekulargewichtsbereich von ca. 80 bis 400 g/mol.

Die vorstehend genannten Komponenten können verwendet werden, um abhängig vom jeweiligen Mischungsverhältnis der Komponenten des Trübungsystems bestimmte Trübungstemperaturen, wie in Abb. 1 erläutert, einzustellen.

### Additive

Als Additive können je nach Bedarf übliche UV-Stabilisatoren wie auch anorganische oder organische Farbstoffe für bestimmte Lichtwellenlängenbereiche, Alterungsschutzmittel, Haftverbesserer, wie z. B. funktionalisierte Silane, und pH-Regulatoren, wie z. B. Natronlauge, zugesetzt werden.

### Polymermatrix

Die erfindungsgemäßen Trübungssysteme werden für die beanspruchte Anwendung homogen mit vernetzbaren Monomeren gemischt, so daß nach Einbringung dieser homogenen Mischung und anschließender Polymerisation das jeweils ausgewählte Trübungssystem gleichmäßig verteilt in einer nicht mehr fließfähigen Polymermatrix eingebettet ist.

Die erfindungsgemäße Polymermatrix besteht aus einem oder mehreren polymerisierten monofunktionellen ethylenisch ungesättigten Monomeren und einem oder mehreren polymerisierten mehrfunktionellen ethylenisch ungesättigten Monomeren, wobei letztere für die dreidimensionale Vernetzung sorgen. Am besten geeignet sind wasserlösliche Monomere. In Monomergemischen können jedoch auch wasserunlösliche Monomere in einer Menge enthalten sein, die die hydrophilen Eigenschaften der Polymermatrix nicht entscheidend beeinträchtigt.

Beispiele für wasserlösliche monofunktionelle Monomere sind Acrylsäure, Methacrylsäure, Alkali- oder Ammoniumsalze der Acrylsäure oder Methacrylsäure, Hydroxyethylacrylat, Hydroxyethylmethacrylat, Hydroxypropylacrylat, Hydroxypropylmethacrylat, Acrylamid, Methacrylamid, N-Alkylacrylamid, N,N-Dialkylacrylamid, N-Alkylmethacrylamid, N,N-Dialkylmethacrylamid, 2-Hydroxy-3-methacryloxypropyltrimethylammoniumchlorid, 3-Methacrylamidopropyltrimethylammoniumchlorid, 2-Acrylamido-2-methylpropansulfonsäure, Methacryloxyethylphosphat und N-Vinylpyrrolidon, wobei diese Liste keinen Anspruch auf Vollständigkeit erhebt.

Beispiele für mehrfunktionelle Monomere sind Ethylenglykoldiacrylat und -dimethacrylat, Butandioldiacrylat und -dimethacrylat, Hexandioldiacrylat und -dimethacrylat, Diethylenglykoldiacrylat und -dimethacrylat, Triethylenglykoldiacrylat und -dimethacrylat, Tetraethylenglykoldiacrylat und -dimethacrylat, Polyethylenglykoldiacrylat und -dimethacrylat, Dipropylenglykoldiacrylat und -dimethacrylat, Tripropylenglykoldiacrylat und -dimethacrylat, Trimethylolpropantriacrylat und -trimethacrylat, Glycerintriacrylat und -trimethacrylat, Pentaerythrittetraacrylat und -tetramethacrylat, Acrylsäureanhydrid, Methacrylsäureanhydrid, Allylacrylat, Allylmethacrylat und N,N-Methylenbisacrylamid, wobei diese Liste keinen Anspruch auf Vollständigkeit erhebt.

### Radikalische Polymerisation

Der Aufbau der Polymermatrix erfolgt durch radikalische Polymerisation der wäßrigen Lösung der Monomeren und Vernetzer in Gegenwart des Trübungssystems und der Froststabilisatoren und gegebenenfalls der Additive. Die Polymerisation erfolgt unter Zugabe von Radikalbildnern und wird durch Wärme, Redoxinitiatoren oder durch UV-Strahlung ausgelöst. Die Radikalbildner sind bevorzugt ebenfalls wasserlöslich. Beispiele für Radikalbildner sind Peroxodisulfate, Cumolhydroperoxid und t-Butylhydroperoxid. Als Reduktionsmittel in einem Redoxinitiatorsystem können Schwefelverbindungen wie Natriumsulfit, Natriumdithionit, Natriumdisulfit, Natriumthiosulfat, Natriumhydroxymethylsulfinat oder Formamidinsulfinsäure eingesetzt werden. Als Reduktionsmittel kommen weiterhin auch Ascorbinsäure oder Übergangsmetallsalze in Frage.

Die Aushärtung erfolgt bevorzugt bei Raumtemperatur ohne zusätzliche Wärmezufuhr. Die Gelierzeit kann dabei durch die Kombination aus Peroxidverbindung und Reduktionsmittel bzw. deren Konzentration in weiten Grenzen variiert werden. Im Falle einer UV-Härtung werden anstelle der Peroxide Photoinitiatoren zugesetzt. Als Photoinitiatoren können z. B. Benzophenon, Campherchinon, α-Diketone, Thioxanthonderivate, Benzilketale, Benzoinether, α-Hydroxyacetophenonderivate und Acylphosphinoxide verwendet werden.

### Beispiel 1

Eine Lösung aus

| | |
|---|---|
| 3.9 | Gew.-Teilen eines Addukts von 5 mol Ethylenoxid und 8 mol Propylenoxid (nacheinander angelagert) an 1 mol C₁₃-C₁₅-Oxoalkohol (Tensid 1) |
| 28.5 | Gew.-Teilen 1,2-Propylenglykol |
| 10.8 | Gew.-Teilen Butyldiglykol |
| 5.0 | Gew.-Teilen Acrylsäure |
| 1.5 | Gew.-Teilen Triethylenglykoldiacrylat (TEGDA) |
| 3.4 | Gew.-Teilen Natronlauge (20%ig) |
| 46.9 | Gew.-Teilen entmineralisiertem Wasser |

hat bei 20 °C eine Viskosität von weniger als 20 mPa•s. Durch Zugabe von Kaliumperoxodisulfat und Natriumhydroxymethylsulfinat wird die Aushärtungsreaktion gestartet. Die Mischung wird in einen vorbereiteten Scheibenverbund mit den Abmessungen 50 cm x 50 cm und einem Scheibenzwischenraum von 2 mm gegossen und nach dem Verschließen der Einfüllöffnung in horizontaler Lage ausgehärtet.

Die ausgehärtete Scheibe hat eine Trübungstemperatur von 20 °C, ist froststabil und weist sowohl in vertikaler wie auch in horizontaler Lage keinerlei Schichtdickenunterschiede auf.

### Vergleichsbeispiel 1

Das im Beispiel 1 der DE 35 22 078 beschriebene Gel hat bei 20 °C eine Viskosität von mehr als 2 000 mPa•s und läßt sich nur unter großem Druck und sehr langsam in einen Scheibenverbund wie in Beispiel 1 einbringen. Im Gegensatz zu der in Beispiel 1 beschriebenen Scheibe ist eine derartige Scheibe zwar in horizontaler Lage eben und weist keine Schichtdickenunterschiede auf. In vertikaler Position sackt das Gel jedoch unter dem Einfluß der Schwerkraft ab und verursacht eine Ausbauchung der Scheibe. Im oberen Bereich nimmt die Schichtdicke dabei um bis zu 0.5 mm ab, während sie im unteren Bereich etwa um den gleichen Betrag zunimmt.

### Beispiel 2

Eine Lösung aus

| | |
|---|---|
| 4.3 | Gew.-Teilen eines Addukts aus 70 mol Propylenoxyd und 10 mol Ethylenoxid (im Gemisch angelagert) an 1 mol Trimethylhexamethylendiamin (Tensid 2) |
| 25.9 | Gew.-Teilen 1,2-Propylenglykol |
| 9.8 | Gew.-Teilen Butyldiglykol |
| 5.0 | Gew.-Teilen Acrylsäure |
| 1.5 | Gew.-Teilen TEGDA |
| 3.9 | Gew.-Teilen Natronlauge (20%ig) |
| 49.6 | Gew.-Teilen entmineralisiertem Wasser |

hat bei 20 °C eine Viskosität von weniger als 20 mPa•s.

Eine gemäß Beispiel 1 hergestellte Scheibe hat eine Trübungstemperatur von 41 °C, ist froststabil und weist sowohl in vertikaler wie auch in horizontaler Lage keinerlei Schichtdickenunterschiede auf.

## Patentansprüche

1. Verfahren zur Herstellung eines nicht fließfähigen, temperaturabhängig reversibel lichtdurchlässigen Gelmaterials enthaltend nichtionische und/oder nichtionisch wirkende Tenside als Trübungskomponenten, Froststabilisatoren, Wasser und gegebenenfalls übliche Additive,
dadurch gekennzeichnet,
daß zuerst eine ethylenisch ungesättigte Monomere enthaltende homogene Mischung mit den oben genannten Bestandteilen in niedrigviskosem Zustand an den Applikationsort gebracht wird und daß dann durch Polymerisation eine vernetzte Polymermatrix erzeugt wird, welche die übrigen Komponenten in gleichmäßiger Verteilung enthält.

2. Verfahren nach Anspruch 1,
dadurch gekennzeichnet,
daß die Aushärtung zu einer dreidimensional vernetzten Polymermatrix durch eine radikalische Polymerisation von ethylenisch ungesättigten Monomeren bewirkt wird.

3. Verfahren nach den Ansprüchen 1 und 2,
dadurch gekennzeichnet,
daß Mischungen aus einfach und/oder mehrfach ethylenisch ungesättigten Verbindungen eingesetzt werden.

4. Verfahren nach den Ansprüchen 1 bis 3,
dadurch gekennzeichnet,
daß als Trübungskomponenten nichtionische und/oder nichtionisch wirkende Tenside eingesetzt werden, die in wasserhaltigen Mischungen mit ein- und/oder mehrwertigen Alkoholen und/oder Alkylmono- oder -polyglykolen in der Polymermatrix Trübungspunkte im Bereich von 10 bis 90 °C aufweisen.

5. Verfahren nach den Ansprüchen 1 bis 4,
dadurch gekennzeichnet,
daß als Froststabilisatoren Kombinationen aus ein- oder mehrwertigen Alkoholen, Alkylmono- bzw. -polyglykolen und Alkali-, Erdalkali- oder Ammoniumsalzen oder Harnstoff eingesetzt werden.

6. Verwendung der nach den Ansprüchen 1 bis 5 hergestellten nicht fließfähigen Gelmaterialien als Trübungssystem für temperaturabhängig lichtdurchlässige Verbundverglasungen.

## Claims

1. A process for the preparation of a gel material which is not free-flowing, is reversibly transparent as a function of temperature and comprises nonionic and/or nonionically acting surfactants as clouding components, frost stabilizers, water and, if appropriate, customary additives, characterized in that a homogeneous mixture comprising ethylenically unsaturated monomers and having the abovementioned constituents is first brought to the site of application in a low-viscosity state and in that a crosslinked polymer matrix which comprises the other components in uniform distribution is then produced by polymerization.

2. A process according to claim 1, characterized in that the complete curing to give a three-dimensionally crosslinked polymer matrix is effected by free radical polymerization of ethylenically unsaturated monomers.

3. A process according to either of claims 1 and 2, characterized in that mixtures of mono- and/or polyethylenically unsaturated compounds are employed.

4. A process according to any of claims 1 to 3, characterized in that nonionic and/or nonionically acting surfactants which have cloud points in the range from 10 to 90°C in aqueous mixtures with mono- and/or polyhydric alcohols and/or alkyl-mono- or -polyglycols in the polymer matrix are employed as clouding components.

5. A process according to any of claims 1 to 4, characterized in that combinations of mono- or polyhydric alcohols, alkyl-mono- or -polyglycols and alkali metal salts, alkaline earth metal salts or ammonium salts or urea are employed as frost stabilizers.

6. The use of the gel materials which are not free-flowing prepared according to any of claims 1 to 5 as a clouding system for laminated glazing which is transparent as a function of temperature.

## Revendications

1. Procédé de fabrication d'un matériau en gel non fluide, perméable à la lumière de façon réversible en fonction de la température, contenant des agents tensioactifs non ioniques et/ou à action non ionique, comme composants de trouble, des stabilisateurs au gel, de l'eau et le cas échéant des additifs habituels,
caractérisé en ce qu'
on introduit tout d'abord un mélange homogène contenant des monomères éthyléniquement insaturés avec les composants mentionnés ci-dessus à l'état de basse viscosité à l'endroit de l'application puis on produit par polymérisation une matrice polymère réticulée qui contient les composants habituels en répartition régulière.

2. Procédé selon la revendication 1,
caractérisé en ce que
le durcissement en une matrice polymère réticulée tridimensionnel est produit par une polymérisation radicalaire de monomères éthyléniquement insaturés.

3. Procédé selon les revendications 1 et 2,
caractérisé en ce qu'
on utilise des mélanges de composés mono- et polyéthyléniquement insaturés.

4. Procédé selon les revendications 1 à 3,
caractérisé en ce qu'
on utilise comme composants de trouble des agents tensioactifs non ioniques et/ou à action non ionique qui présentent dans des mélanges aqueux avec des alcools mono- et/ou polyvalents et/ou des mono- ou polyglycols d'alkyle dans la matrice polymère des points de trouble compris entre 10 et 90°C.

5. Procédé selon les revendications 1 à 4,
caractérisé en ce qu'
on utilise comme stabilisateurs au gel des combinaisons d'alcools mono- ou polyvalents, de mono- ou polyglycol d'alkyle, et de sels de métaux alcalins, de métaux alcalino-terreux ou d'ammonium ou de l'urée.

6. Utilisation de matériaux en gel non fluides fabriqués selon les revendications 1 à 5, comme système de trouble pour les vitrages composites perméables à la lumière en fonction de la température.
